# EUROPÄISCHE PATENTSCHRIFT

(11) **EP 3 360 016 B1**
(45) Veröffentlichungstag und Bekanntmachung des Hinweises auf die Patenterteilung: **29.01.2020**
(21) Anmeldenummer: 16744333.2
(22) Anmeldetag: 14.07.2016
(51) Int. Cl.: G05B 19/042

(54) **FELDGERÄT MIT EINEM DURCH EIN BETÄTIGUNGSELEMENT AKTIVIERBARES FUNKMODUL**
FIELD DEVICE COMPRISING A RADIO MODULE THAT CAN BE ACTIVATED BY A CONTROL ELEMENT
DISPOSITIF DE TERRAIN COMPRENANT UN MODULE RADIO QUI PEUT ÊTRE ACTIVÉ PAR UN ÉLÉMENT DE COMMANDE

(30) Priorität: 06.10.2015 DE 102015117009
(43) Veröffentlichungstag der Anmeldung: 15.08.2018
(73) Patentinhaber: VEGA Grieshaber KG, 77709 Wolfach (DE)
(72) Erfinder: ALLGAIER, Volker, 77716 Haslach i.K. (DE); SUM, Christian, 77709 Wolfach (DE)
(74) Vertreter: Patentanwälte Bauer Vorberg Kayser
(86) Internationale Anmeldenummer: PCT/EP2016/066838
(87) Internationale Veröffentlichungsnummer: WO 2017/059973

(56) Entgegenhaltungen:
- DE-A1-102013 103 454
- DE-A1-102013 106 098

## Beschreibung

Die vorliegende Erfindung betrifft ein Feldgerät gemäß dem Oberbegriff des Patentanspruchs 1.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen. Häufig sind solche Feldgeräte mit übergeordneten Einheiten, zum Beispiel Leitsystemen oder Steuereinheiten, verbunden. Diese übergeordneten Einheiten dienen zur Prozesssteuerung, Prozessvisualisierung und/oder Prozessüberwachung. Die aus dem Stand der Technik bekannten Feldgeräte weisen in der Regel ein Gehäuse, einen Sensor und eine in dem Gehäuse angeordnete Elektronikeinheit auf.

Die Energie- und/oder Signalübertragung zwischen Feldgerät und übergeordneten Einheiten erfolgt häufig nach dem bekannten 4 mA bis 20 mA Standard, bei dem eine 4 mA bis 20 mA Stromschleife beziehungsweise eine Zweidrahtleitung zwischen dem Feldgerät und der übergeordneten Einheit ausgebildet ist. Zusätzlich zu der analogen Übertragung von Signalen besteht die Möglichkeit, dass die Messgeräte gemäß verschiedenen anderen Protokollen, insbesondere digitalen Protokollen, weitere Informationen an die übergeordnete Einheit übermitteln oder von dieser empfangen. Beispielhaft seien hierfür das HART-Protokoll oder das Profibus-PA-Protokoll genannt.

Die Energieversorgung dieser Feldgeräte erfolgt ebenfalls über das 4 mA bis 20 mA Stromsignal, sodass neben der Zweidrahtleitung keine zusätzliche Versorgungsleitung notwendig ist. Um den Verdrahtungs- und Installationsaufwand sowie die Sicherheitsmaßnahmen, beispielsweise beim Einsatz in explosionsgeschützten Bereichen, so gering wie möglich zu halten, ist es auch nicht gewünscht, zusätzliche Stromversorgungsleitungen vorzusehen.

Aus dem Stand der Technik sind beispielsweise externe Bedieneinheiten bekannt, die zur Kommunikation mit dem Feldgerät physikalisch an die 4 mA bis 20 mA Stromschleife angeschlossen werden, um so die Bedienung des Feldgerätes über die 4 mA bis 20 mA Stromschleife mittels des HART-Protokolls zu ermöglichen. Derartige externe Bedieneinheiten weisen den Nachteil auf, dass sie wie bereits erwähnt, physikalisch an die 4 mA bis 20 mA Stromschleife angeschlossen werden müssen. Hierzu muss die Zweidrahtleitung derartig modifiziert, beispielsweise abisoliert und/oder durchtrennt, werden, sodass die Bedieneinheit angeschlossen werden kann. Dies stellt einen relativ hohen Aufwand dar und ist vor Ort nicht immer ohne Weiteres zu bewerkstelligen.

Aus dem Stand der Technik ist es ferner bekannt, Funkmodule zur leichteren Bedienung von Feldgeräten zu verwenden. Es sind Lösungen bekannt, bei denen die Feldgeräte integrierte Funkmodule aufweisen, Funkmodule nachgerüstet werden oder in einem Messumformerspeisegerät, einer Einrichtung zur Energieversorgung der Feldgeräte, angeordnet sind. Insbesondere bei den Varianten mit integriertem Funkmodul oder mit einem Funkmodul, das nachgerüstet werden soll, besteht im Stand der Technik das Problem, dass bei einer Energieversorgung über die 4 mA bis 20 mA Stromschleife nur äußerst geringe Leistungen zur Verfügung stehen und die über die Stromschleife zuführbare Energie teilweise nicht ausreicht, um das Funkmodul, die Elektronikeinheit und den Sensor gleichzeitig mit ausreichend Energie zu versorgen, sodass ein Betrieb nicht oder nur erschwert möglich ist. Im Stand der Technik sind hierfür Lösungen bekannt, bei denen das Funkmodul mit einer eigenen Versorgungsleitung versehen ist oder zusätzliche Batterien zum Betrieb des Funkmodules in dem Feldgerät vorgesehen sind. Eigene Versorgungsleitungen bedingen aber den oben genannten erhöhten Installations- und Sicherheitsaufwand, der vermieden werden soll. Sämtliche mit Funkmodulen ausgerüsteten Feldgeräte bringen dabei zusätzlich das Risiko mit sich, dass diese nicht immer vollständig kontrollierbar sind, sodass ein ungewolltes Bedienen oder auch eine bewusste Manipulation nicht jederzeit ausgeschlossen oder verhindert werden könnte. Insbesondere Angriffe durch gezielte Manipulation von Feldgeräten stellen ein zunehmendes Risiko dar, das mit der vorliegenden Erfindung ausgeschlossen werden soll.
Weiterer Stand der Technik ist aus der DE 10 2013 106 098 A1 bekannt. Der Erfindung liegt damit die Aufgabe zugrunde, ein bekanntes Feldgerät mit vorzugsweise modularem Aufbau derart weiterzubilden, dass die aus dem Stand der Technik bekannten Nachteile und Risiken vermieden werden.
Diese Aufgabe wird durch ein Feldgerät mit den Merkmalen des Patentanspruchs 1 gelöst. Ein erfindungsgemäßes Feldgerät weist ein Gehäuse, einen Sensor und eine in dem Gehäuse angeordnete Elektronikeinheit sowie ein mit der Elektronikeinheit verbindbares und abnehmbares Funkmodul auf, wobei das Funkmodul ein Bedienelement zur Aktivierung und Deaktivierung des Funkmoduls aufweist, das mechanisch derart angeordnet ist, dass eine Betätigung des Bedienelements nur bei abgenommenem Bediengerät möglich ist.

Eine derartige Anordnung des Bedienelements zur Aktivierung und Deaktivierung des Funkmoduls hat den Vorteil, dass das Funkmodul nicht unbemerkt aktiviert oder deaktiviert werden kann, da eine Deaktivierung des Feldgerätes von einer übergeordneten Einheit, beispielsweise einer übergeordneten Steuerung, in jedem Fall registriert wird. Ferner ist durch eine entsprechende mechanische Anordnung sichergestellt, dass ein versehentliches Aktivieren oder Deaktivieren des Funkmoduls ausgeschlossen wird.
Ein derartiges Bedienelement kann ferner aus energetischer Sicht sinnvoll sein, um ein Funkmodul vollständig zu deaktivieren und beispielsweise Suchvorgänge nach verfügbaren Kommunikationspartnern oder dergleichen vollständig zu unterbinden. Auf diese Weise kann ein deutlich reduzierter Energieverbrauch erreicht werden.
Eine günstige mechanische Anordnung wird erreicht, wenn das Bedienelement derart angeordnet ist, dass es nur bei abgenommenem Funkmodul zugänglich ist. Ist das Funkmodul üblicherweise mit der Elektronikeinheit mechanisch und elektrisch verbunden, so kann auf diese Weise sichergestellt werden, dass durch ein Abnehmen des Funkmoduls von der Elektronikeinheit eine Deaktivierung des Feldgeräts veranlasst wird, sodass diese in einer übergeordneten Einheit detektiert werden kann.

Eine optimale Ausgestaltung wird erreicht, wenn das Funkmodul in einer Anzeige- und/oder Bedieneinheit angeordnet ist. Üblicherweise werden Feldgeräte mit einer Anzeige- und/oder Bedieneinheit, an der vor Ort beispielsweise Messwerte abgelesen oder Konfigurationen des Feldgerätes vorgenommen werden können, ausgestattet. Durch eine Integration des Funkmoduls in eine solche Anzeige- und/oder Bedieneinheit kann ein platzsparender Aufbau sowie ein elektrisch günstiger Aufbau erreicht werden, da die Anzeige- und/oder Bedieneinheit in der Regel bereits entsprechende Elektronikkomponenten für eine Anzeige von Messwerten und/oder die Konfiguration des Feldgerätes aufweist. In einer solchen Konfiguration ist es möglich, dass das Funkmodul lediglich die bereits aufbereiteten Messwerte oder entsprechende Konfigurationsmerkmale übermittelt und so entsprechende Elektronikkomponenten nicht mehrfach verbaut werden müssen.

Vorteilhafterweise werden Anzeige- und/oder Bedienformationen zwischen der Anzeige- und/oder Bedieneinheit und der Elektronikeinheit leitungsgebunden übermittelt. Ist also das Funkmodul ebenfalls in der Anzeige- und/oder Bedieneinheit angeordnet, so findet auch hier eine leitungsgebundene Übermittlung der Anzeige- und/oder Bedieninformationen zwischen dem Funkmodul und der Elektronikeinheit statt. Ein entsprechender Aufbau ermöglicht eine besonders einfache Integration des Funkmoduls in bestehende Feldgerätkonzepte, wobei dafür insbesondere keine Änderungen an der Elektronikeinheit notwendig sind.

Es sei an dieser Stelle angemerkt, dass eine Kommunikation zwischen Elektronikeinheit und dem Funkmodul auch ohne dass das Funkmodul in einer Anzeige- und/oder Bedieneinheit angeordnet ist, leitungsgebunden erfolgen kann.

Alternativ hierzu ist es aber auch möglich, dass Anzeige- und/oder Bedieninformationen zwischen der Anzeige- und/oder Bedieneinheit und der Elektronikeinheit bzw. zwischen dem Funkmodul und der Elektronikeinheit drahtlos über das Funkmodul übermittelt werden. In diesem Fall ist aber vorauszusetzen, dass die Elektronikeinheit bereits ein Funkmodul aufweist, über das eine Funkkommunikation möglich ist.

Eine besonders geschickte Anordnung kann erreicht werden, wenn das Funkmodul mechanisch derart verankert und das Bedienelement an einer Unterseite des Funkmoduls so angeordnet ist, dass das Bedienelement nur nach Lösen der Verankerung und Entnehmen des Funkmoduls aus seinem Gehäuse zugänglich ist. Ist beispielsweise das Funkmodul mechanisch mittels eines Rast- oder Bajonettverschlusses an der Elektronikeinheit befestigt, so kann ein an der Unterseite des Funkmoduls, d. h. an einer der Elektronikeinheit zugewandten Seite des Funkmoduls angeordnetes Bedienelement nur bedient werden, wenn die mechanische Verankerung des Funkmoduls gelöst und diese von dem Elektronikmodul entfernt wird.

Vorteilhafterweise ist das Feldgerät ferner mechanisch verriegelbar und gegen unbefugte Bedienung sicherbar ausgestaltet. Auf diese Weise kann insbesondere durch eine entsprechende Ausgestaltung des Gehäuses Manipulationen noch effektiver vorgebeugt werden.

Insbesondere bei Feldgeräten, bei denen Funkmodule nachgerüstet werden sollen aber auch bei Feldgeräten, bei denen Funkmodule regulär vorgesehen sind, kann es vorteilhaft sein, wenn das Funkmodul eine integrierte eigene Energieversorgung, insbesondere eine Batterie, zur teilweisen oder vollständigen Energieversorgung des Funkmoduls aufweist. Dies kann insbesondere bei Feldgeräten, die mit sehr geringer Leistung betrieben werden oder bei denen eine Nachrüstung von Funkmodulen im Energiekonzept des Feldgerätes bislang nicht vorgesehen war, vorteilhaft sein, da auf diese Weise der Betrieb eines Funkmoduls unabhängig von der Energieversorgung des Feldgerätes erfolgen kann. Kann aber auch bei Feldgeräten sinnvoll sein, bei denen das Funkmodul nicht nachgerüstet wird, sondern bereits im Energiekonzept des Feldgerätes berücksichtigt ist. Durch eine solche Batterie kann beispielsweise eine erhöhte Reichweite des Funkmoduls oder eine für bestimmte Anwendungen notwendige erhöhte Bandbreite der Funkkommunikation durch zusätzliche Energie aus der eigenen Energieversorgung bzw. der Batterie erreicht werden.

Das Funkmodul kann ferner beispielsweise eine Zeiterfassungseinheit aufweisen, sodass das Funkmodul beispielsweise nur zu bestimmten Zeiten aktivierbar ist.

Eine derartige Zeiterfassungseinheit kann ferner dazu benutzt werden, dass das Funkmodul nach einer Aktivierung für eine vorgebbare Zeit aktiviert bleibt und danach selbsttätig wieder deaktiviert wird. So ist es beispielsweise möglich, das Funkmodul für eine Konfiguration, beispielsweise für 10 Minuten zu aktivieren, wobei sich das Funkmodul anschließend selbsttätig deaktiviert, sodass auf diese Weise einerseits Energie gespart wird und andererseits Manipulationsversuchen über die Funkschnittstelle effektiv entgegen gewirkt wird.

Ferner können die Elektronikeinheit und/oder die Anzeige- und/oder Bedieneinheit je ein Funkmodul aufweisen, wobei die Funkmodule derart ausgebildet sind, dass sie Funksignale eines anderen Funkmoduls empfangen und wieder versenden. Auf diese Weise kann eine effektive Reichweitenerhöhung die Funkmodule der Feldgeräte erreicht werden, sodass große Reichweiten auch bei an sich geringer Sendeleistung der Funkmodule möglich sind.

Ein modulares Feldgerätekonzept weist eine Mehrzahl von Gehäusen, eine Mehrzahl von Sensoren sowie eine Mehrzahl von mit den Sensoren verbindbaren Anzeige- und/oder Bedieneinheiten auf, wobei das Feldgerätesystem wenigstens eine Anzeige- und/oder Bedieneinheit mit einem Funkmodul zur drahtlosen Kommunikation mit einer weiteren Einheit aufweist und das Funkmodul ein Bedienelement, insbesondere einen Schalter oder Taster, zur Aktivierung und Deaktivierung des Funkmoduls aufweist, das mechanisch derart angeordnet ist, dass eine Betätigung nur bei deaktiviertem Funkmodul, insbesondere bei von dem Funkmodul abgenommener Anzeige- und/oder Bedieneinheit, möglich ist.

Die vorliegende Erfindung wird nachfolgend anhand eines Ausführungsbeispiels unter Bezugnahme auf die beiliegende Figur eingehend erläutert. Es zeigt:

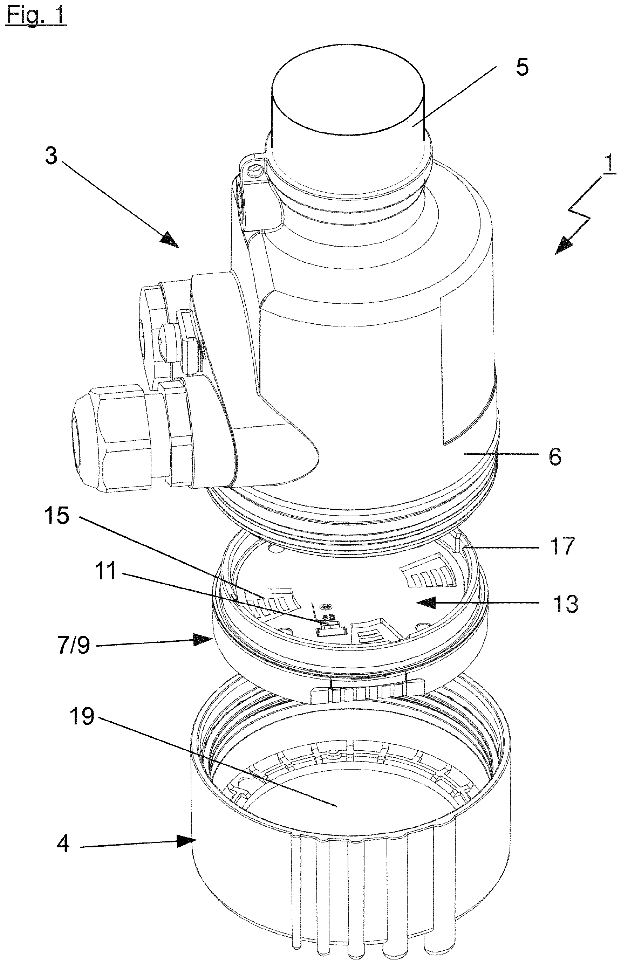

- Figur 1:: eine perspektivische Explosionsdarstellung eines Ausführungsbeispiels eines Feldgeräts gemäß der vorliegenden Anmeldung.

Figur 1 zeigt eine Explosionsdarstellung einer perspektivischen Ansicht eines Feldgeräts 1 gemäß der vorliegenden Anmeldung. Das Feldgerät 1 weist im Wesentlichen ein Gehäuse 3 auf, in dem eine Elektronikeinheit 6 (vorliegend nicht dargestellt) angeordnet ist. Einenends ist mit der Elektronikeinheit 6 ein vorliegend nur schematisch dargestellter Sensor 5 verbunden, der an dem Gehäuse 3 angeordnet ist. Der Sensor 5 kann aber auch über entsprechende Messleitungen von dem Gehäuse 3 abgesetzt und beispielsweise über entsprechende Verlängerungen in einer Messumgebung angeordnet sein.

Das Feldgerät 1 kann beispielsweise über eine Zweidrahtleitung, die durch eine entsprechende Öffnung des Gehäuses 3 geführt ist, mit einer übergeordneten Einheit, beispielsweise einer Steuerung oder Messwarte verbunden sein.

An einer der Sensorseite gegenüberliegenden Seite ist im vorliegenden Ausführungsbeispiel eine Anzeige- und/oder Bedieneinheit 7 mit einem integrierten Funkmodul 9 gezeigt. Die Anzeige- und/oder Bedieneinheit 7 kann mit der Elektronikeinheit 6 über einen an einem umlaufenden Rand der Anzeige- und/oder Bedieneinheit vorgesehenen Bajonettverschluss 17 mit der Elektronikeinheit 6 mechanisch verbunden werden, wobei bei einer mechanischen Verbindung gleichzeitig über Anschlusskontakte 15, die an der Anzeige- und/oder Bedieneinheit 7 unterseitig angeordnet sind, eine elektrische Verbindung hergestellt wird. An einer der Elektronikeinheit 6 abgewandten Seite der Anzeige- und/oder Bedieneinheit 7 ist im vorliegenden Ausführungsbeispiel ein Display zur Anzeige von Messwerten oder anderen gerätespezifischen Informationen sowie ein Tastenfeld zur Eingabe von Bedieninformationen, beispielsweise zur Konfiguration der Elektronikeinheit 6 angeordnet. Das Gehäuse 3 ist im vorliegenden Ausführungsbeispiel mit einem Deckel 4 verschließbar, wobei in dem Deckel 4 ein Sichtfenster 19 angeordnet ist, sodass die Displayeinheit der Anzeige- und/oder Bedieneinheit 7 auch bei aufgesetztem Deckel 4 von außen sichtbar bleibt.

An der Anzeige- und/oder Bedieneinheit 7 ist im vorliegenden Ausführungsbeispiel an der der Elektronikeinheit 6 zugewandten Seite ein Bedienelement 11 zur Aktivierung und Deaktivierung des in der Anzeige- und/oder Bedieneinheit 7 angeordneten Funkmoduls 9 angeordnet. Das Bedienelement 11 ist im vorliegenden Ausführungsbeispiel als mechanischer Schiebeschalter ausgeführt, kann aber ebenso als Kippschalter, Taster, Magnetschalter oder dergleichen ausgeführt sein.

Das Bedienelement 11 ist im vorliegenden Ausführungsbeispiel zur Aktivierung und Deaktivierung des Funkmoduls 9 nur dann zugänglich, wenn die Anzeige- und/oder Bedieneinheit 7 von der Elektronikeinheit 6 gelöst und aus dem Gehäuse 3 entnommen wird. Auf diese Weise ist ein effektiver Schutz vor Fehlbedienungen gegeben.

Ferner wird dadurch, dass die Anzeige- und/oder Bedieneinheit 7 von der Elektronikeinheit 6 zur Betätigung des Bedienelements 11 abgenommen werden muss, auch eine vorübergehende Deaktivierung des Feldgeräts 1 insgesamt veranlasst, sodass durch die vorübergehende Deaktivierung des Feldgeräts 1 Manipulationen einfach erkannt werden können.

### Bezugszeichenliste

- 1: Feldgerät
- 3: Gehäuse
- 4: Deckel
- 5: Sensor
- 6: Elektronikeinheit
- 7: Anzeige- und/oder Bedieneinheit
- 9: Funkmodul

- 11: Bedienelement
- 13: Unterseite
- 15: Kontakte
- 17: Bajonettverschluss
- 19: Sichtfenster

## Patentansprüche

1. Feldgerät (1) mit einem Gehäuse (3), einem Sensor (5), einer in dem Gehäuse (3) angeordneten Elektronikeinheit (6) und einem Funkmodul (9), **dadurch gekennzeichnet, dass** das
mit der Elektronikeinheit (6) verbindbare und abnehmbare Funkmodul (9), ein Bedienelement (11) zur Aktivierung und Deaktivierung des Funkmoduls (9) aufweist, wobei
das Funkmodul (9) in einer Anzeige- und/oder Bedieneinheit (7) des Feldgeräts (1) angeordnet ist, wobei das Bedienelement (11) mechanisch derart angeordnet ist, dass eine Betätigung des Bedienelements (11) nur bei abgenommener Anzeige- und/oder Bedieneinheit (7) möglich ist.

2. Feldgerät (1) gemäß Anspruch 1,
**dadurch gekennzeichnet, dass**
Anzeige- und/oder Bedieninformationen zwischen der Anzeige- und/oder Bedieneinheit (7) und der Elektronikeinheit (6) leitungsgebunden übermittelt werden.

3. Feldgerät (1) gemäß Anspruch 1,
**dadurch gekennzeichnet, dass**
Anzeige- und/oder Bedieninformationen zwischen der Anzeige- und/oder Bedieneinheit (7) und der Elektronikeinheit (6) drahtlos über das Funkmodul (9) übermittelt werden.

4. Feldgerät (1) gemäß einem der vorhergehenden Ansprüche,
**dadurch gekennzeichnet, dass**
das Funkmodul (9) mechanisch derart verankert und das Bedienelement (11) an einer Unterseite (13) des Funkmoduls (9) so angeordnet ist, dass das Bedienelement (11) nur nach Lösen der Verankerung und Entnehmen des Funkmoduls (9) aus dem Gehäuse (3) zugänglich ist.

5. Feldgerät (1) gemäß einem der vorhergehenden Ansprüche,
**dadurch gekennzeichnet, dass**
das Feldgerät (1) mechanisch verriegelbar und gegen unbefugte Bedienung sicherbar ist.

6. Feldgerät (1) gemäß einem der vorhergehenden Ansprüche,
**dadurch gekennzeichnet, dass**
das Funkmodul (9) eine eigene integrierte Energieversorgung, insbesondere eine Batterie zur teilweisen oder vollständigen Energieversorgung des Funkmoduls (9) aufweist.

7. Feldgerät (1) gemäß einem der vorhergehenden Ansprüche,
**dadurch gekennzeichnet, dass**
das Funkmodul (1) eine Zeiterfassungseinheit aufweist.

8. Feldgerät (1) gemäß Anspruch 7,
**dadurch gekennzeichnet, dass**
das Funkmodul (9) nach einer Aktivierung für eine vorgebbare Zeit aktiviert bleibt und danach selbsttätig deaktiviert wird.

9. Feldgerät (1) gemäß Anspruch 3,
**dadurch gekennzeichnet, dass**
die Elektronikeinheit (6) und die Anzeige- und/oder Bedieneinheit (7) je ein Funkmodul (9) aufweisen, wobei die Funkmodule (9) derart ausgebildet sind, dass sie Funksignale eines anderen Funkmoduls (9) empfangen und wieder versenden.

10. Modulares Feldgerätesystem mit
- einer Mehrzahl von Gehäusen (3)
- einer Mehrzahl von Sensoren (5)
- einer Mehrzahl von mit den Sensoren (5) verbindbaren Elektronikeinheiten (6) und
- einer Mehrzahl von mit den Elektronikeinheiten (6) verbindbaren Anzeige- und/oder Bedieneinheiten (7), wobei das Feldgerätesystem wenigstens eine Anzeige- und/oder Bedieneinheit (7) mit einem Funkmodul (9) gemäß Patentanspruch 1 aufweist.

## Claims

1. A field device (1), comprising a housing (3), a sensor (5), an electronic unit (6) disposed in the housing (3) and a radio module (9), **characterized in that** the radio module (9), which can be connected to and detached from the electronic unit (6), has an operating member (11) for activating and deactivating the radio module (9), wherein the radio module (9) is disposed in a display and/or operating unit (7) of the field device (1), wherein the operating member (11) is mechanically arranged in such a way that an operation of the operating member (11) is possible only if the display and/or operating unit (7) has been detached.

2. The field device (1) according to claim 1,
**characterized in that**
display and/or operating information is transmitted between the display and/or operating unit (7) and the electronic unit (6) in a wired manner.

3. The field device (1) according to claim 1,
**characterized in that**
display and/or operating information is transmitted between the display and/or operating unit (7) and the electronic unit (6) in a wireless manner via the radio module (9).

4. The field device (1) according to any one of the preceding claims,
**characterized in that**
the radio module (9) is mechanically anchored and the operating member (11) is disposed on an underside (13) of the radio module (9) in such a way that the operating member (11) is accessible only after a disconnection of the anchorage and a removal of the radio module (9) from the housing.

5. The field device (1) according to any one of the preceding claims,
**characterized in that**
the field device (1) can be mechanically locked and secured against unauthorized operation.

6. The field device (1) according to any one of the preceding claims,
**characterized in that**
the radio module (9) has its own integrated energy supply, in particular a battery for partially or completely supplying the radio module (9) with energy.

7. The field device (1) according to any one of the preceding claims,
**characterized in that**
the radio module (1) has a timer unit.

8. The field device (1) according to claim 9,
**characterized in that**
the radio module (9), subsequent to being activated, remains activated for a predefinable time and is then automatically deactivated.

9. The field device (1) according to claim 5,
**characterized in that**
the electronic unit (6) and the display and/or operating unit (7) each have one radio module (9), wherein the radio modules (9) are configured in such a way that they receive and retransmit radio signals of another radio module (9).

10. A modular field device system, comprising
- a plurality of housings (3),
- a plurality of sensors (5),
- a plurality of electronic units (6) that can be connected to the sensors (5), and
- a plurality of display and/or operating units (7) that can be connected to the electronic units (6), wherein the field device system comprises at least one display and/or operating unit (7) with a radio module (9) in accordance with patent claim 1.

## Revendications

1. Dispositif de terrain (1) comprenant un boîtier (3), un capteur (5), une unité électronique (6) agencée dans le boîtier (3) et un module radio (9), **caractérisé par le fait que** le module radio (9) apte à être relié à l'unité électronique (6) et à être retiré présente un élément de commande (11) destiné à activer et à désactiver le module radio (9), dans lequel le module radio (9) est disposé à l'intérieur d'une unité d'affichage et/ou de commande (7) du dispositif de terrain (1), dans lequel ledit élément de commande (11) est disposé de manière mécanique de telle sorte qu'un actionnement de l'élément de commande (11) n'est possible que lorsque l'unité d'affichage et/ou de commande (7) est retirée.

2. Dispositif de terrain (1) selon la revendication 1, **caractérisé par le fait que** des informations d'affichage et/ou de commande sont transmises par câble entre l'unité d'affichage et/ou de commande (7) et l'unité électronique (6).

3. Dispositif de terrain (1) selon la revendication 1, **caractérisé par le fait que** des informations d'affichage et/ou de commande sont transmises sans fil via le module radio (9) entre l'unité d'affichage et/ou de commande (7) et l'unité électronique (6).

4. Dispositif de terrain (1) selon l'une quelconque des revendications précédentes, **caractérisé par le fait que** le module radio (9) est ancré mécaniquement de telle sorte et que l'élément de commande (11) est disposé sur une face inférieure (13) du module radio (9) de telle manière que l'élément de commande (11) n'est accessible qu'après avoir desserré l'ancrage du module radio (9) et retiré celui-ci du boîtier (3).

5. Dispositif de terrain (1) selon l'une quelconque des revendications précédentes, **caractérisé par le fait que** le dispositif de terrain (1) peut être verrouillé mécaniquement et être sécurisé contre une commande non autorisée.

6. Dispositif de terrain (1) selon l'une quelconque des revendications précédentes, **caractérisé par le fait que** le module radio (9) présente une propre alimentation intégrée en énergie, en particulier une batterie pour l'alimentation partielle ou complète en énergie du module radio (9).

7. Dispositif de terrain (1) selon l'une quelconque des revendications précédentes, **caractérisé par le fait que** le module radio (1) comprend une unité d'enregistrement de temps.

8. Dispositif de terrain (1) selon la revendication 7, **caractérisé par le fait que** le module radio (9) reste activé, après une activation, pour un temps prédéfinis-sable et est ensuite désactivé automatiquement.

9. Dispositif de terrain (1) selon la revendication 3, **caractérisé par le fait que** l'unité électronique (6) et l'unité d'affichage et/ou de commande (7) comprennent chacune un module radio (9), dans lequel les modules radio (9) sont conçus de manière à recevoir des signaux radio d'un autre module radio (9) et émettent ceux-ci de nouveau.

10. Système modulaire de dispositif de terrain comprenant
- une pluralité de boîtiers (3)
- une pluralité de capteurs (5)
- une pluralité d'unités électroniques (6) aptes à être connectées aux capteurs (5), et
- une pluralité d'unités d'affichage et/ou de commande (7) aptes à être reliées aux unités électroniques (6), dans lequel le système de dispositif de terrain comprend au moins une unité d'affichage et/ou de commande (7) comprenant un module radio (9) selon la revendication 1.
